# EUROPÄISCHE PATENTSCHRIFT

(11) **EP 1 417 414 B1**
(45) Veröffentlichungstag und Bekanntmachung des Hinweises auf die Patenterteilung: **10.01.2007**
(21) Anmeldenummer: 02794793.6
(22) Anmeldetag: 15.08.2002
(51) Int. Cl.: F03G 7/08

(54) **VERFAHREN ZUR GEWINNUNG VON ELEKTROENERGIE AUS DER UMWELT**
METHOD FOR OBTAINING ELECTRIC ENERGY FROM THE ENVIRONMENT
PROCEDE POUR PRODUIRE DE L'ENERGIE ELECTRIQUE PROVENANT DE L'ENVIRONNEMENT

(30) Priorität: 17.08.2001 DE 10140629
(43) Veröffentlichungstag der Anmeldung: 12.05.2004
(73) Patentinhaber: Borst GmbH, 99441 Umpferstedt (DE)
(72) Erfinder: BORST, Kurt-Uwe, 99441 Kromsdorf (DE)
(74) Vertreter: Hengelhaupt, Jürgen
(86) Internationale Anmeldenummer: PCT/EP2002/009127
(87) Internationale Veröffentlichungsnummer: WO 2003/016716

(56) Entgegenhaltungen:
- DE-A- 4 417 925

## Beschreibung

Die im Mittelalter durch die Menschheit begonnene Ausnutzung von Umweltenergien, damals insbesondere die Windenergie, ist in den letzten Jahrzehnten durch moderne Solar- und Windkraftanlagen wieder forciert worden.

Zur Nutzung der Windkraft dienen fast ausschließlich Windkraftrotoren mit horizontaler Welle, die auf hohen, freistehenden Masten angeordnet sind. Die Anlagen sind an bestimmte Aufstellungsorte gebunden und haben aus Wirtschaftlichkeitsgründen eine gewisse Mindestgröße, so dass sie oft das Landschaftsbild erheblich zerstören.

Solaranlagen haben zwar nach jahrzehntelanger Entwicklung einen gewissen technischen Standart erreicht, erfordern jedoch nach wie vor hohe Investitionskosten. Umgerechnet auf die während ihrer normalen Lebensdauer gewinnbare Energiemenge entstehen spezifische Energiekosten, die die Anlagen nur durch staatliche Förderung sowohl bei den Investitionskosten als auch bei der Abnahme zeitweise überschüssiger Energie wirtschaftlich lohnend werden lassen.

Außerdem steht die zu ihrem Betrieb benötigte Solarfläche in der Regel nur bei Einfamilienhäusern und punktuellen Kleinanlagen zur Verfügung.

Mit DE 44 17 925 A1 ist auch ein Verfahren bekannt, mit dem die Bewegung von durch Windkräfte belasteten elastischen oder elastisch gelagerten Massen zur Energiegewinnung genutzt wird, indem die durch die Windkräfte verursachte ständige Änderung der Raumlage des Gegenstandes einen Energieerzeuger antreibt. Sofern der Gegenstand nicht selber genügend elastisch ist, wird er mit einer elastischen Rückführung versehen, die ihn nach einer Windkraftbewegung in eine arbeitsfähige Ausgangsposition zurückbefördert.

Der Erfindung liegt die Aufgabe zu Grunde, ein Verfahren anzugeben, mit dem Umweltenergie wirtschaftlich lohnend verwertet werden kann und das universell einsetzbar ist.

Erfindungsgemäß wird die Aufgabe gelöst durch die Merkmale der Ansprüche 1 und 11. Zweckmäßige Ausgestaltungen sind Gegenstand der Unteransprüche.

Danach wird die durch mechanische Belastungsänderurg hervorgerufene Bewegung in mindestens einer Richtung beweglich gelagerter Bauwerksteile mittels zwischen beweglichen und festen Bauwerksteilen angeordneter mechanisch/elektrischer Energiewandler in elektrische Energie gewandelt.

Insbesondere Fassadenteile an Gebäuden werden ohnehin beweglich gelagert oder lassen sich, wenn sie zuvor starr gelagert wurden, so an einer Fassade anbringen, das sich zwischen der Lageraufnahme an dem betreffenden Fassadenteil und dem Lager an der Fassade ein Bewegungsaufnehmer, z.B. ein piezoelektrischer oder elektromagnetischer Druckwandler, zwischenschalten lässt, der bei Windbewegung des Fassadenteils eine elektrische Energie erzeugt. Solche Fassadenteile sind insbesondere Fensterscheiben, Fenster, Glasflächen, Fassadenplatten, z.B. vorgehängte Klinker, Türen etc.

Auf eine Gebäudefläche wirkt ständig eine in ihrer Höhe stark wechselnde Windenergie, die zu einer stetig wechselnden mechanischen Belastung der Fassadenteile führt. Sind derartige Fassadenteile lose beweglich aufgehängt, wie das z.B. bei vorgehängten Fassaden der Fall ist, führt das zu ständigen Bewegungen der Fassadenteile. Diese Bewegungen lassen sich, auch wenn sie ein mit bloßem Auge nicht wahrnehmbares Ausmaß haben, für eine Energiewandlung nutzen. Moderne Druckaufnehmer sind in der Lage, selbst bei geringsten Bewegungen eine Spannung zu induzieren. Durch die Reihenschaltung und/oder Parallelschaltung entsprechend vieler Energiewandler lassen sich so verwertbare Spannungs- und Stromhöhen erreichen. Die Spannung kann gleichgerichtet und in Batterien gesammelt oder mittels Umrichtern in eine vom Netz aufzunehmende Energieform gewandelt werden. Die Art der Energieerzeugung hat den Vorteil, dass sie im Gegensatz zur Solarenergie unterbrechungslos zu Verfügung steht und dass große Flächen mit einem erheblichen potentiellen Energieeintrag verwertbar sind.

Legt man eine mittlere verwertbare Leistungsdichte von ca. 10 W pro Quadratmeter zu Grunde, so lässt sich z.B. bei einem freistehenden Bürogebäude üblicher Größe eine ständige Leistung von 20 kW erzeugen. Dies entspricht der Leistung, die für die technische Gebäudeausrüstung oder die für die Beleuchtung des Gebäudes zur Verfügung stehen muss. Verwertbar ist die Bewegung von Fassadenteilen an vertikalen ebenso wie an geneigten oder horizontalen Flächen. Die Energiewandler lassen sich je nach den örtlich vorliegenden Verhältnissen punktuell, linienförmig oder flächig zwischen Fassadenteil und Bauwerk anordnen. Normalerweise werden die Energiewandler so anzuordnen sein, dass sie eine Bewegung verwerten, die senkrecht zur Ebene der Fassadenteile verläuft. Die Energiewandler und/oder entsprechende Lagerelemente zu denen die Energiewandler parallel angeordnet sind, lassen sich für diesen Fall so gestalten, dass die Bewegung des Fassadenteils in einer Richtung, in den anderen Richtungen jedoch nur die Kräfte aufgenommen werden. Sie können jedoch auch so gestaltet bzw. so angeordnet sein, dass sie die Bewegung in mehreren Richtungen aufzunehmen vermögen.

Gegebenenfalls können zwischen den Fassadenteilen und den Energiewandlern bewegungsübertragende Elemente, z.B. Hebelgetriebe, zwischengeschaltet sein, die den Weg erhöhen oder die Bewegung in eine andere Form, z.B. eine Drehbewegung umwandeln.

Fensterscheiben lassen sich bei rahmenloser Anbringung an einer Fassade beispielsweise mit Punktbefestigungen halten, in die jeweils ein mechanisch/elektrischer Energiewandler integriert ist. Wird wie bei Wohngebäuden eine Befestigung in Fensterrahmen gewählt, so lassen sich die Fensterscheiben mittels elastischer Dichtungen in die Rahmen einbetten, so dass sie in geringem Maße gegen den Rahmen beweglich sind. Beispielsweise an den Ecken lassen sich dann zwischen Rahmen und Fensterscheibe Energiewandler anbringen.

Die Bauwerksteile werden so angeordnet, z. B. durch eine Aufhängung mit geringer Schräglage, dass sie sich nach einer Windbewegung durch ihr Eigengewicht zurückstellen.

Neben Fassadenteilen lassen sich auch weitere Bauwerkseinrichtungen zur Windenergiewandlung nutzen. So kann die Bewegung von Fahnen an einer Fahnenstange im Wind ausgenutzt werden indem die Aufhängung einer Fahne so erfolgt, dass zur Fahnenstange eine Energiewandler zwischengeschaltet ist, der bei wechselndem Zug eine elektrische Spannung erzeugt.

Die Erfindung soll nachstehend anhand eines in einer Figur gezeigten Ausführungsbeispiels näher erläutert werden.

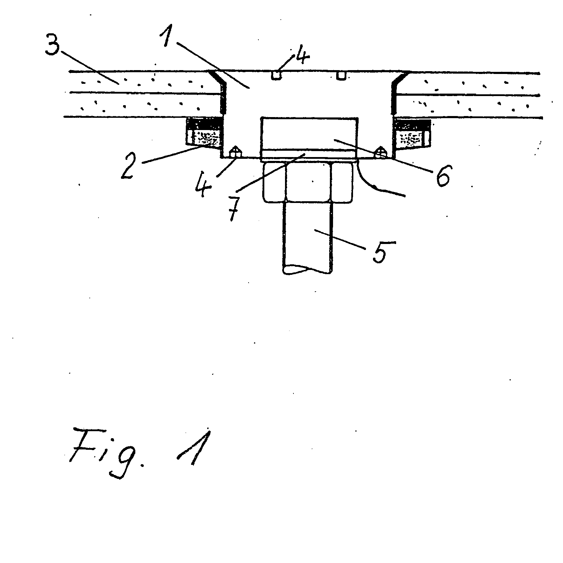

Die Figur zeigt eine erfindungsgemäße Punktbefestigung für große rahmenlose Glasscheiben. Die Punktbefestigung besteht aus einer Buchse 1, die an einer Seite eine 45°-Abkröpfung aufweist und zur anderen Seite hin mit einem Gewinde versehen ist, auf das ein Gewindering 2 passt. Buchse 1 und Gewindering 2 nehmen durch eine Durchgangsbohrung hindurch eine Glasscheibe 3 zwischen sich auf. Die Buchse 1 ist zum Festhalten beim Verschrauben vorn und hinten mit Stirnlöchern 4 versehen, in die ein Stirnlochschlüssel passt. Zur Befestigung an einem Bauwerk dient ein Bolzen 5. Zwischen der Buchse 1 und dem Bolzen 5 ist ein piezoelektrischer Druckwandler 6 angeordnet, der kleinste Bewegungen der Glasscheibe 3 in eine elektrische Spannung umsetzt. Mehrere derartige Druckwandler 6 werden in einer Reihen/Parallel-Schaltung zusammengefasst und mit einem hier nicht gezeigten Umrichter verbunden, der die erzeugte Energie an das Netz abgibt. Zwischen Bolzen 5 und Druckwandler 6 ist ein Federelement 7, z. B. aus Gummi, angeordnet, das für eine elastische Lagerung der Glasscheibe 3 sorgt.

## Patentansprüche

1. Verfahren zur Gewinnung von Elektroenergie aus der Umwelt,
**dadurch gekennzeichnet, dass**
die durch mechanische Belastungsänderung hervorgerufene Bewegung in mindestens einer Richtung lose beweglich gelagerter Bauwerksteile mittels zwischen beweglichen und festen Bauwerksteilen angeordneter mechanisch/elektrischer Energiewandler in elektrische Energie gewandelt wird.

2. Verfahren nach Anspruch 1,
**dadurch gekennzeichnet, dass**
die mechanisch/elektrischen Energiewandler zu Befestigungsanordnungen von Bauwerkteilen örtlich parallel angeordnet werden.

3. Verfahren nach Anspruch 1,
**dadurch gekennzeichnet, dass**
die mechanisch/elektrischen Energiewandler örtlich in Reihe zu Befestigungsanordnungen von Bauwerkteilen angeordnet werden.

4. Verfahren nach einem der vorhergehenden Ansprüche,
**dadurch gekennzeichnet, dass**
Fassadenteile mit dem Bauwerk über mechanisch/elektrische Energiewandler beweglich verbunden werden.

5. Verfahren nach den Ansprüchen 1 bis 3,
**dadurch gekennzeichnet, dass**
Fassadenteile mit Rahmen versehen werden, die mit dem Bauwerk über mechanisch/elektrische Energiewandler beweglich verbunden werden.

6. Verfahren nach einem der Ansprüche 1 bis 5,
**dadurch gekennzeichnet, dass**
die Bauwerksteile so angeordnet werden, dass sie sich nach einer durch Wind verursachten Bewegung durch ihr Eigengewicht in ihre Ausgangsposition zurückstellen.

7. Verfahren nach einem der vorhergehenden Ansprüche,
**dadurch gekennzeichnet, dass**
die mechanisch/elektrischen Energiewandler in Punkbefestigungen integriert werden.

8. Verfahren nach einem der vorhergehenden Ansprüche,
**dadurch gekennzeichnet, dass**
die mechanisch/elektrischen Energiewandler elektrisch in Reihen/Parallelschaltungen zusammengefasst werden.

9. Verfahren nach einem der vorhergehenden Ansprüche,
**dadurch gekennzeichnet, dass**
als mechanisch/elektrische Energiewandler elektromagnetische Wandler verwendet werden.

10. Verfahren nach einem der vorhergehenden Ansprüche,
**dadurch gekennzeichnet, dass**
als mechanisch/elektrische Energiewandler piezoelektrische Wandler verwendet werden.

11. Gebäude,
**dadurch gekennzeichnet, dass**
es Fassadenteile aufweist, die in mindestens einer Richtung lose beweglich gelagert sind und zwischen dem Gebäudekörper und den Fassadenteilen angeordnete mechanisch/elektrische Energiewandler aufweist, deren bei durch mechanische Belastungsänderung hervorgerufene Bewegung der Fassadenteile erzeugte Elektroenergie in Batterien sammelbar oder ins Netz einzuspeisen ist.

## Claims

1. Method for obtaining electric energy from the environment,
**characterised in that**
the movement in at least one direction of loosely movably arranged building parts caused by a change in the mechanical load by means of mechanical/electrical energy converters arranged between movable and fixed building parts is converted into electric energy.

2. Method according to claim 1,
**characterised in that**
the mechanical/electrical energy converters are arranged locally in parallel to fastening arrangements of building parts.

3. Method according to claim 1,
**characterised in that**
the mechanical/electrical energy converters are arranged locally in series to fastening arrangements of building parts.

4. Method according to any one of the preceding claims,
**characterised in that**
facade parts are movably connected with the building via mechanical/electrical energy converters.

5. Method according to any of the claims 1 to 3,
**characterised in that**
facade parts are provided with frames which are movably connected with the building via mechanical/electrical energy converters.

6. Method according to any of the claims 1 to 5,
**characterised in that**
the building parts are arranged in such a way that after a movement caused by wind they return to their starting position by means of their own weight.

7. Method according to any of the preceding claims,
**characterised in that**
the mechanical/electrical energy converters are integrated into point mounting attachments.

8. Method according to any of the preceding claims,
**characterised in that**
the mechanical/electrical energy converters are electrically combined in series/parallel connections.

9. Method according to any of the preceding claims,
**characterised in that**
electromagnetic converters are used as mechanical/electrical energy converters.

10. Method according to any of the preceding claims,
**characterised in that**
piezoelectric converters are used as mechanical/electrical energy converters.

11. Building
**characterised in that**
it is provided with facade parts which are loosely movably arranged in at least one direction and is provided with mechanical/electrical energy converters arranged between the building itself and the facade parts the electric energy of which generated by the movement of the facade parts caused by a change in the mechanical load can be collected in batteries or is to be fed into the electrical network.

## Revendications

1. Procédé pour la génération d'énergie électrique à partir de l'environnement,
**caractérisé en ce que**
le mouvement provoqué par variation de la charge mécanique d'éléments de construction installés de façon mobiles, libres en au moins une direction, est converti en énergie électrique au moyen de convertisseurs d'énergie mécaniques/électriques placés entre des éléments de construction mobiles et fixes.

2. Procédé selon la revendication 1,
**caractérisé en ce que**
les convertisseurs d'énergie mécaniques/électriques sont disposés localement en parallèle avec les structures de fixation d'éléments de construction.

3. Procédé selon la revendication 1,
**caractérisé en ce que**
les convertisseurs d'énergie mécaniques/électriques sont disposés localement en série avec les structures de fixation d'éléments de construction.

4. Procédé selon l'une des revendications précédentes
**caractérisé en ce que**
des éléments de façades sont reliés de façon mobile avec la construction par des convertisseurs d'énergie mécaniques/électriques.

5. Procédé selon les revendications 1 à 3,
**caractérisé en ce que**
des éléments de façade sont munis de cadres, lesquels sont reliés de façon mobile avec la construction par des convertisseurs d'énergie mécaniques/électriques.

6. Procédé selon l'une des revendications 1 à 5,
**caractérisé en ce que**
les éléments de construction sont disposés de telle sorte qu'ils se replacent dans leur position de départ du fait de leur poids propre en cas de mouvement causé par le vent.

7. Procédé selon l'une des revendications précédentes,
**caractérisé en ce que**
les convertisseurs d'énergie mécaniques/électriques sont intégrés à des fixations ponctuelles.

8. Procédé selon l'une des revendications précédentes,
**caractérisé en ce que**
les convertisseurs d'énergie mécaniques/électriques sont groupés électriquement en circuits en parallèle/en série.

9. Procédé selon l'une des revendications précédentes,
**caractérisé en ce que**
des convertisseurs électromagnétiques sont utilisés comme convertisseurs d'énergie mécaniques/électriques.

10. Procédé selon l'une des revendications précédentes,
**caractérisé en ce que**
des convertisseurs piézoélectriques sont utilisés comme convertisseurs d'énergie mécaniques/électriques.

11. Bâtiment,
**caractérisé en ce que**
ledit bâtiment présente des éléments de façade, lesquels sont disposés librement de façon mobile en au moins une direction, et **en ce que** lequel présente des convertisseurs d'énergie mécaniques/électriques disposés entre le corps de bâtiment et les éléments de façade dont l'énergie électrique, produite par le mouvement des susdits éléments de façade provoqué par variation de la charge mécanique, est stockable dans des accumulateurs ou devant être fournie dans le réseau d'alimentation.
